# EUROPEAN PATENT SPECIFICATION

(11) **EP 1 777 909 B1**
(45) Date of publication and mention of the grant of the patent: **27.02.2008**
(21) Application number: 05292192.1
(22) Date of filing: 18.10.2005
(51) Int. Cl.: H04L 29/06, H04L 12/64, H04M 7/00

(54) **Improved media gateway**
Verbesserter Media-Gateway
Passerelle de média ameliorée

(43) Date of publication of application: 25.04.2007
(73) Proprietor: Alcatel Lucent, 75008 Paris (FR)
(72) Inventor: Waitzmann, Carsten, Dipl.-Ing., 70806 Kornwestheim (DE)
(74) Representative: Schmidt, Werner Karl

(56) References cited:
- EP-A- 1 575 245
- EP-A- 1 583 304
- US-A1- 2002 154 646
- US-B1- 6 577 631
- DENGYUAN XU, HUAXIN ZENG, JI LI: "Physical Frame Timeslot Switching (PFTS) in the Single User Plane Architecture Network (SUPANET)" PARALLEL AND DISTRIBUTED COMPUTING: APPLICATIONS AND TECHNOLOGIES: 5TH INTERNATIONAL CONFERENCE, PDCAT 2004, SINGAPORE, [Online] - 10 December 2004 (2004-12-10) pages 383-395, XP007900073 Singapore ISBN: 3-540-24013-6 Retrieved from the Internet: URL:http://www.springerlink.com/media/3768 dpxuvn2unb7hwkak/contributions/4/2/8/r/428 r17udpk2u5e67.pdf>

## Description

The invention relates to the transportation of packet data, in particular to a gateway which internally operates by using a virtual connection identifier.

Media gateways within Next Generation Networks (= NGN) make use of packet technologies for voice transportation, the so-called voice over packet (= VoP) technology. Packet technologies may use connection oriented technologies such as AAL1, AAL2, MPLS or FR as transport technology (AAL = ATM Adaptation Layer; ATM = Asynchronous Transfer Mode; MPLS = Multi-Protocol Label Switching; FR = Frame Relay). Likewise, packet technologies may use connectionless technologies such as IP/Ethernet or IPoverAAL5 as transport technology (IP = Internet Protocol).

Furthermore, high density media gateway system architectures have to cope with the challenge of a distributed architecture including distributed termination of various protocol layers. In this environment, reliability requirements (carrier gradeness) as known from legacy TDM network elements have to be taken into account as well (TDM = Time Division Multiplexing).

Media gateways which face the requirement of distributed system architectures use, e.g., IP forwarding mechanisms to address, e.g., multiple media processing resources. Such solutions either lead to CPU involvement in the data path, resulting in a "slow path" with the requirement of, e.g., 8 k x 100 pps = 800 kpps, or complex, costly hardware implementation (CPU = Central Processing Unit; pps = packets per second). However such implementations are not that generic in terms of independence from external transport characteristics.

Almost all media gateway architectures use connection oriented packet switching (= CO-PS) such as ATM. Beside CO-PS, there are two other categories, connectionless packet switched (= CLPS) and connection oriented circuit switched (= CO-CS) (terminology according to ITU-T G.809, Y.1730, Y.2011).

CPU based or specialised hardware implementations are considered as being poor in terms of features such as performance (i.e. forwarding thousands of packets), reliability (i.e. implementation of carrier grade products), simplicity (i.e. allowing simple and efficient implementations), extendability (i.e. supporting higher throughput requirements), and flexibility (i.e. dedicated hardware needed for different applications). Not all the limitations apply to both concepts.

US 2003/0091046 A1 describes a virtual gateway which receives endpoint information such as IP address and port of endpoints in a communications network from a call coordinator. The virtual gateway sets up a cross-connection between the received public IP addresses and provides a cross-connection ID, e.g., consisting of its own IP address and a particular service port, to the call coordinator. The call coordinator, in turn, passes the cross-connection ID to each endpoint. The endpoints will then use this cross-connection ID to complete any further call signaling and voice traffic destined for another endpoint. This way, connection problems arising, e.g., from the fact that the endpoints are located behind the same firewall or NAT device can be eliminated (NAT = Network Address Translation).

US 6,647,428 B1 describes an architecture for the transport of multiple services in connectionless packet based communication networks. There is a need for networks capable to serve packet transport from lower-speed ingress ports at customer premises to higher-speed uplink ports located at gateways to core transport networks. A virtual network consisting of routing and/or multiplexing devices is created whereby the common purpose of the virtual network is to aggregate traffic originating from external interfaces for delivery to an uplink interface to a core network. For the packet transport within the virtual network a unique self-defined OPTNet packet format is created (OPTNet = Optical Packet Transport Network). For every data packet entering or leaving the virtual network, an addressing conversion among the original address format and the OPTNet packet format is required.

EP 1 583 304 A concerns a method of providing a reconfiguration of a packet switching fabric plane and/or a source board of a media gateway, as well as a gateway for executing this method. The media gateway comprises a set of packet switching fabric planes, a set of source boards and a set of destination boards. The set of source boards and the set of destination boards are connected via Ethernet trunks through a set of packet switching fabric planes. The media gateway detects failures of a packet switching fabric plane and/or a destination board. If it detects such failure, it determines the Ethernet media access control address of the concerned destination board. Then, it reassigns, depending on the MAC address type, the determined Ethernet medium access address to a spare packet switching fabric plane and/or a spare destination board (MAC = Media Access Control).

It is the object of the present invention to provide an improved media gateway.

The object of the present invention is achieved by a gateway for connecting a public switched telephone network and an Internet Protocol network, comprising at least one interface unit with the public switched telephone network, at least one interface unit with the Internet Protocol network, and at least one processing unit for media conversion between the public switched telephone network and the Internet Protocol network, whereby one or more of said interface units and/or processing units are adapted to communicate gateway-internally via an Ethernet switch for internal packet switching, using an internal connection oriented layer with virtual connection identifiers (= VCIDs), whereby a virtual connection identifier is integrated into a frame used for the transport within the gateway and is inserted in a field following an internal backplane header of the frame and flanked by a payload of the frame.

Therefore, the present invention concerns the internal operation of a connectionless layer 2 transport infrastructure in a VoP gateway in a connection oriented mode, i.e., on an end-to-end basis. Internal in the sense of the invention means within the gateway.

The present invention enables high density system architectures to fulfill the requirements of distributed system architectures, i.e., allowing a decoupling and distribution of specific resources of protocol processing. It supports flexible system architectures by allowing to distribute protocol termination points within the system, e.g., Ethernet/IP/UDP and RTP, or SDH/ATM and AAL2 (UDP = User Datagram Protocol; RTP = Real-Time Transport Protocol; SDH = Synchronous Digital Hierarchy).

Furthermore, the VCID address structuring is done in a way that the VCID is of a logical nature. Thus, it supports system redundancy since it is not impacted by internal equipment protection switching mechanisms.

Moreover, the invention represents a generic concept. The approach is applicable to any type of external transport technology, connectionless or connection oriented ("horizontal decoupling").

Multilayer switching is the combination of traditional layer 2 switching with layer 3 protocol routing in a single product, usually through a fast hardware implementation. The invention facilitates multiple interworking/switching capabilities such as service interworking (circuit to packet, e.g., TDM to RTP/UDP/IP), network interworking (packet to packet, e.g., RTP/UDP/IP to AAL2/ATM), and L2, L3, L4 switching (e.g., UDP switching), whereby L2 to L4 denote layers of the OSI reference model (OSI = Open Systems Interconnection). Thus, the gateway is adapted to perform multilayer switching, e.g. by facilitating the processing of layer 2, layer 3, layer 4 protocols.

The invention supports a separation of external and internal transport domains ("vertical decoupling"). It minimises the bandwidth cost, i.e., maximises the bandwidth efficiency, and provides a large enough address space for the sake of system capacity and redundancy support. What is more, the approach according to the invention enables a fast path support, i.e., it provides an efficient packet forwarding without the need of CPU involvement known as "slow path".

This VCID structure ensures that the Media Gateway can cope with carrier grade reliability requirements such as performance, robustness, and simplicity. High performance, for example, concerning the objective of short switchover times, robustness is achieved, e.g., by minimizing the reconfiguration activity, and simplicity is measured in a minimisation of downtimes and a stable call preservation. The VCID, referencing a given connection, is not bound to a physical resource but moves around within well defined redundancy/protection groups as soon as the functional status, e.g., active or standby, of a specific resource is changing.

Further advantages are achieved by the embodiments of the invention indicated by the dependent claims.

According to a preferred embodiment of the invention, the interface units and/or media conversion processing units are linked via Ethernet trunks. For the transport of the communication data across the gateway, the interface units and/or media conversion processing units of the gateway may be connected via an Ethernet trunk, i.e., a flow of Ethernet frames having the same MAC destination and source address (MAC = Media Access Control).

Preferably, the interface units and/or processing units are adapted to handle packets used for communication over the Ethernet switch, said packets comprising an Ethernet header, a payload, and a virtual connection identifier inserted between said Ethernet header and payload. The VCID may be inserted into conventional Ethernet frames. If the transport direction is from a circuit switched network to a packet switched network, the frames will be generated from the traffic data arriving from the circuit switched network. This may be executed in a media processing unit.

According to another preferred embodiment of the invention, the payload comprises data complying with connectionless or connection oriented external transport technologies.

In a preferred embodiment, interface units and/or processing units are adapted to allocate the virtual connection identifier to another resource if a functional status of a resource changes. The VCID is not bound to a physical resource. The VCID moves around within a well defined redundancy/protection group as soon as the functional status of a specific resource changes.

According to another preferred embodiment of the invention, the gateway, when detecting a failure and/or breakdown of one of said interface units and/or processing units, is adapted to provide a reconfiguration of said interface units and/or processing units. A preferred method of providing this reconfiguration would be to determine an address of the concerned or faulty interface unit and/or processing unit and reassign the determined address to a spare interface unit and/or processing unit. For example, the gateway determines the Ethernet MAC address of the concerned or faulty units and reassigns the determined Ethernet MAC address to a spare unit.

According to another preferred embodiment of the invention, the interface units and/or processing units are represented by physical boards. The interface units and/or processing units may be, e.g., circuit interface modules serving as source boards, packet interface modules serving as destination boards, and media processing units positioned intermediately on the Ethernet trunk.

Preferably, the virtual connection identifier comprises a logical board identifier for identifying a logical resource in a logical way. This is important in order to make the VCID efficient for system internal redundancy support.

Preferably, the virtual connection identifier comprises a board resource identifier for identifying a unit-specific local resource auch as a DSP channel (DSP = Digital Signal Processing). Connected to a logical resource of an interface and/or processing unit, there may be a multitude of unit-specific local resources assigned to the logical resource. Thus, there may be a hierarchical architecture, structured in a interface and/or processing unit, a logical board, and a unit-specific local resource.

According to another preferred embodiment of the invention, the use of the virtual connection identifier takes place only internally with regard to the gateway, in particular limited to the packet side of the gateway. In other words, the virtual connection identifier is inserted into the communication traffic and removed from the communication traffic within the gateway.

These as well as further features and advantages of the invention will be better appreciated by reading the following detailed description of presently preferred exemplary embodiments taken in conjunction with accompanying drawings of which:
- Fig. 1: is a simplified block diagram of a gateway between two networks.
- Fig. 2: is a block diagram of a gateway according to the invention
- Fig. 3: shows the reconfiguration of the gateway of Fig. 3
- Fig. 4: is a block diagram of an Ethernet packet
- Fig. 5: is a block diagram of the hierarchical structure of a VCID
- Fig. 6: is a layer diagram of a Ethernet connection with the use of VCIDs according to the invention
- Fig. 7: is a block diagram of a gateway system according to an embodiment of the invention in a first application
- Fig. 8: is a block diagram of a gateway system according to an embodiment of the invention in another application
- Fig. 9: is a block diagram of a gateway system according to an embodiment of the invention in still another application

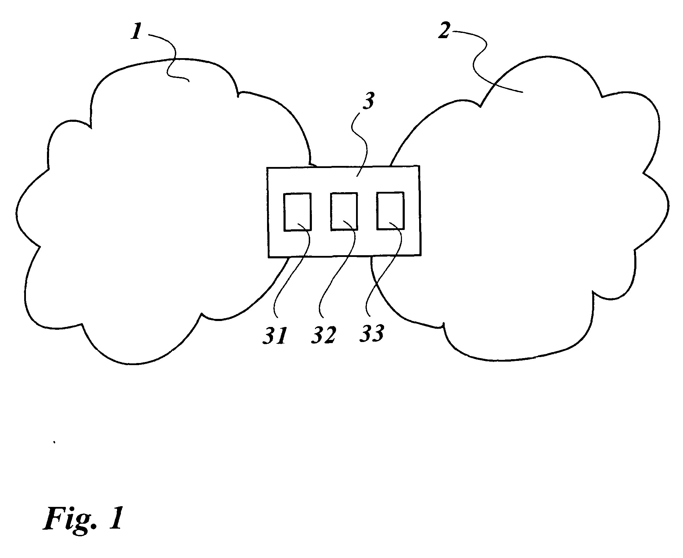

Fig. 1 shows two telecommunication networks 1, 2 which are connected with a gateway 3. The telecommunication networks 1, 2 may be of different type, e.g., the telecommunication network 1 may be a conventional circuit switched network such as the PSTN whereas the telecommunication network 2 may be a packet switched network, e.g. an IP network like the Internet (PSTN = Public Switched Telephone Network). The gateway 3 transfers media such as voice, audio or video information from one type of network to another type of network. For example, at the interface of an ISDN network and an IP based network, the gateway may terminate the circuit-switched channels of the ISDN network and generate from the voice information contained therein RTP media streams to be sent through the IP based packet network (ISDN = Integrated Services Digital Network).

The gateway functionality which enables the interconnection of different network types may be represented by a media gateway 31, a media gateway controller 32, and a signalling gateway 33. The connections supported by the gateway 3 may be point-to-point connections or multipoint connections. Media Gateway Controller controls the Media Gateway by means of a standardised interface, like ITU-T H.248.1.

The gateway 3 may provide interconnection of an IP-based environment to circuit switched networks as well as switching and routing functionalities for stream-like communications as voice, fax or video communications between two or more terminals connected to the networks. Further, the gateway 3 may provide seamless working of voice and fax connections between public switched telephone networks and IP-based networks.

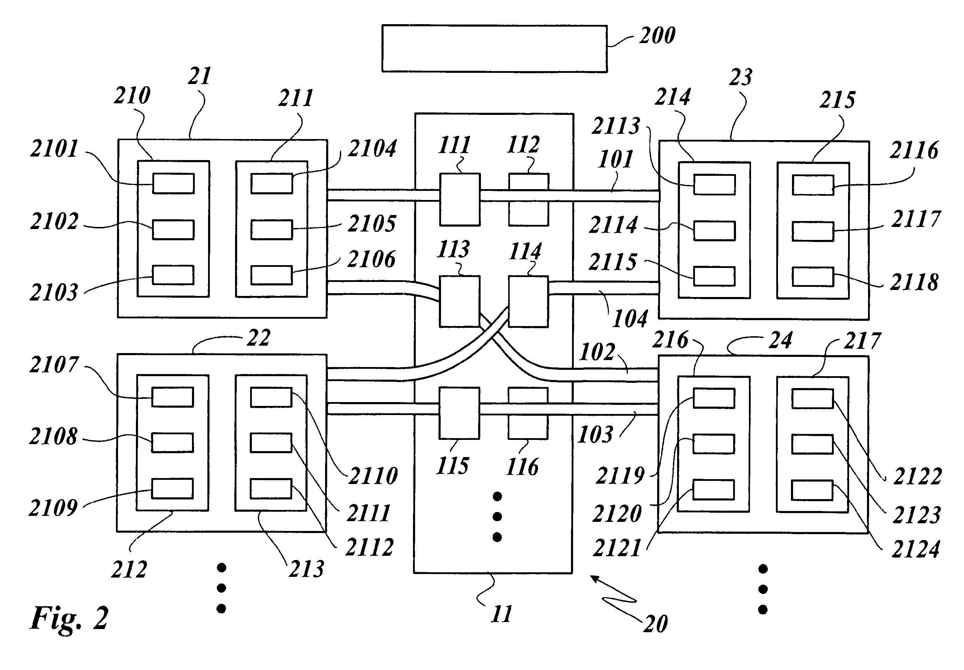

Fig. 2 gives an exemplary set-up of a media gateway as described in Fig. 1 unit 31. The media gateway 20 comprises a control unit 200, a plurality of interface and/or processing units 21 to 24, and a packet switching fabric 11 (= PSF) comprising a plurality of packet switching fabric planes 111 to 116. Preferably, the PSF 11, consisting of a multitude of PSF planes 111 to 116, constitutes an Ethernet switch.

The interface and/or processing units 21 to 24 interface media streams handled by the media gateway 20. For example, each of the interface and/or processing units 21 to 24 handles up to 8k real time protocol sessions (RTP = Real Time Protocol). For the sake of simplicity, the Fig. 2 is limited to the four interface and/or processing units 21 to 24. In reality, however, the interface and/or processing units may comprise a much greater amount of units, as indicated by the points below the interface and/or processing units 22, 24. The same restrictions apply to the PSF 11 where only six PSF planes 111 to 116 are shown.

The interface and/or processing units 21 to 24 are connected with one another through the PSF planes 111 to 116. A plurality of Ethernet trunks 101 to 104 are defined between the interface and/or processing units 21 to 24. Each Ethernet trunk 101 to 104 represents a flow of Ethernet frames having the same MAC destination address. The PSF planes 111 to 116 provide switching functionalities for the Ethernet frames of the Ethernet trunks 101 to 104 defined between the interface and/or processing units 21 to 24. Preferably, each of the interface and/or processing units 81 to 84 is connected by at least one physical link with each of the PSF planes 111 to 116. The PSF planes 111 to 116 switch the received Ethernet frames to respective output ports assigned to the Ethernet trunk 101 to 104 the received Ethernet frame is assigned to. Further, it is possible that two or more of the interface and/or processing units 21 to 24 are physically connected with one or more of the PSF planes 111 to 116.

According to an embodiment of Fig. 2, the interface and/or processing units 21 and 22 play the role of source boards which are sources of Ethernet frames switched by the PSF planes 111 to 116 and one or more of the interface and/or processing units 23 and 24 play the role of destination boards which are destinations of Ethernet frames switched by the PSF planes 111 to 116.
Further, it is also possible that one or more of the interface and/or processing units 21 to 24 play both the role of source boards and the role of destination boards, e.g., when serving a bi-directional real-time connection.

The interface and/or processing units 21 to 24 comprise a multitude of logical boards 210 to 217. The logical boards 210 to 217 again are divided into smaller resources 2101 to 2124, representing board-specific local resources such as a DSP channel. Due to this hierarchical set-up, it is possible to synchronously process a plurality of parallel communication connections over the PSF 11.

One of the interface and/or processing units 21 to 24 which plays the role of a source board serves, e.g., 8k incoming media streams each assigned to a RTP session, e.g. handled by one of the resources 2101 to 2124. It assigns the incoming media streams to Ethernet trunks 101 to 104 connecting the source board with dedicated destination boards. It multiplexes, with the help of VCIDs, up to thousands of such media streams, i.e., thousand of real-time protocol sessions on each of these Ethernet trunks 101 to 104. A VCID is inserted into an Ethernet frame carrying in its payload section communication traffic of a resource. The VCID allows to uniquely identify the frame and to allocate the frame to the corresponding destination resource at the destination board.

The source boards 21, 22 execute a switching process and forward the outgoing Ethernet frames according to their MAC destination address to one of the outgoing Ethernet trunks 101 to 104 which connect the source board with the PSF planes 111 to 116. Then, the PSF planes 111 to 116 execute a switching process and forward the outgoing Ethernet frames according to their MAC destination address to one of the outgoing Ethernet trunks 101 to 104 which connect the PSF planes 111 to 116 with the destination boards 23, 24. The destination board demultiplexes, according to their VCID, the media streams received via the Ethernet trunks. Then, it handles the further transmission of these media streams via one of the output ports of the destination board.

As an example, it is thus possible to serve in parallel all communication channels of resources 2101 to 2106 of unit 21, transport the communication traffic associated with these channels over the PSF 11 to the destination unit 23, and to distribute the communication traffic by means of the VCIDs to their respective destination resources 2113 to 2118 of the unit 23. By help of the VCIDs, virtual connections are created which facilitate the transmission of a multitude of communication data channels over the Ethernet switch.

The control unit 200 administrates and controls the Ethernet switching process. In an initialisation phase, the control unit 200 defines and establishes the Ethernet trunks between source and destination addresses and creates the corresponding address tables for the PSF planes 111 to 116 and the source boards which perform the above mentioned Ethernet switching process.

In a preferred embodiment of the gateway 20, the control unit 200 may apply an internal Ethernet address schema on the interface and/or processing units 21 to 24 and the PSF planes 111 to 116 in this initialisation phase. This internal address schema uses two or more different internal MAC address types. For example, it uses the following three different kinds of Ethernet MAC address types within this address schema:

First, it may use a dynamic MAC address type specifying a dynamic path in terms of packet switching fabric plane and destination board. Such address type is applied to Ethernet trunks used for traffic applications, in particular Ethernet trunks transporting media streams of real-time protocol sessions.

Second, it uses a static/dynamic MAC address type specifying a path that is static in terms of destination board and dynamic in terms of packet switching fabric plane. For example, it assigns such static/dynamic MAC address type to Ethernet trunks representing internal active or stand-by card to card connections, which are for example used for the context synchronisation of packet interface / media conversion module cards.

Third, it uses a static MAC address type specifying a path that is static in term of packet switching plane and link and destination board. For example, it assigns such static MAC address type to system internal test traffic.

In the initialisation phase, the control unit 200 defines a network of Ethernet trunks 101 to 104 having different types of destination MAC address types. These MAC address types are adapted to the respective function of the Ethernet trunk 101 to 104 in the context of the gateway 20.

In the operational phase, the control unit 200 monitors the interface and/or processing units 21 to 24 and the PSF planes 111 to 116 to detect failures and/or breakdowns of the interface and/or processing units 21 to 24 and the PSF planes 111 to 116. If it detects such failures and/or breakdowns, it determines the Ethernet trunks 101 to 104 affected by the faulty interface and/or processing unit 21 to 24 and/or the faulty PSF plane 111 to 116. Then, it checks the type of the destination MAC address assigned to the affected Ethernet trunks 101 to 104.

If this MAC address is of the dynamic MAC address type and the Ethernet trunk 101 to 104 is affected by a faulty destination board, it reallocates the determined Ethernet MAC address to a interface and/or processing unit 21 to 24, for example, to a interface and/or processing unit 21 to 24 having enough capacity to take over the load of the faulty interface and/or processing unit 21 to 24. In case the Ethernet trunk is affected by a faulty PSF plane 111 to 116, it reconfigures the Ethernet trunk 101 to 104 and reconfigures the route of this Ethernet trunk 101 to 104 via a spare PSF plane 111 to 116, e.g. a PSF plane 111 to 116 having enough capacity to take over the load of this Ethernet trunk 101 to 104.

If the determined Ethernet MAC address is of the static/dynamic address type and the Ethernet trunk 101 to 104 is affected by a faulty PSF plane 111 to 116, it reconfigures the route of this Ethernet trunk 101 to 104 and guides the Ethernet trunk 101 to 104 via a spare PSF plane 111 to 116 to the destination board. If the Ethernet trunk 101 to 104 is affected by a faulty destination board, it does not perform a reallocation of the MAC address nor perfoms a reconfiguration of the route assigned to the Ethernet trunk 101 to 104.

If the determined Ethernet MAC address is of the static MAC address type, it performs no reallocation of the Ethernet MAC address.

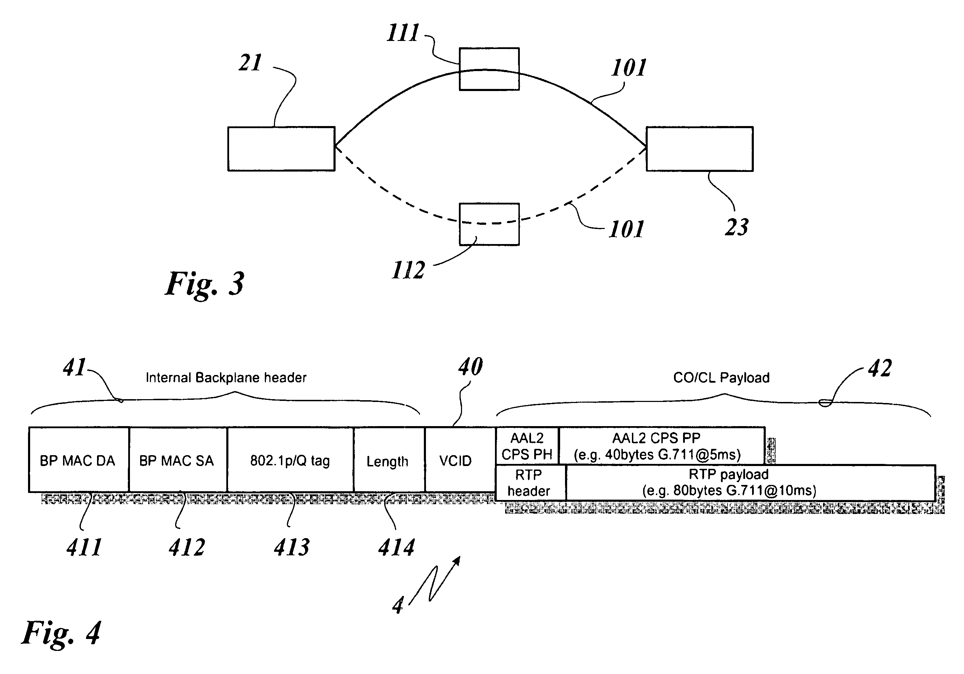

In the following, the processing of the static/dynamic Ethernet MAC address type is exemplified by hand of the figure Fig. 3 which shows an Ethernet trunk 101 defined between a source board, namely the interface and/or processing unit 21, and a destination board, namely the interface and/or processing unit 23. The Ethernet trunk 101 has a destination MAC address which is of the static/dynamic MAC address type.

The Ethernet trunk 101 is static in terms of the destination board, i.e., not subject of configuration in case of a destination board failure or breakdown. But, the Ethernet trunk 101 is a dynamic path in terms of a PSF plane failure, i.e. subject of reconfiguration in case of a PSF plane failure. In case of a failure of the PSF plane 111, the control unit 200 performs changes in the address tables of the source board, namely the interface and/or processing unit 21, that causes the source board to switch packets assigned to the Ethernet trunk 101 to the PSF plane 112. This causes the change of the Ethernet trunk route shown in Fig. 3. This change in Ethernet trunk route is transparent for the upper protocol layers, and it is therefore not necessary for these layers to reroute media streams to spare Ethernet trunks.

The transport of stream data multiplexed on the Ethernet trunk 101 is not affected by the change of the Ethernet trunk route. The Ethernet frames containing the stream data are multiplexed on the Ethernet trunk 101 by means of the VCID which does not undergo any change. The VCID address structuring is done in a way that the VCID is of a logical nature and thus is not impacted by internal equipment protection switching mechanisms. Thus, the present invention provides a means for data transport in a media gateway which is independent of the environmental changes and therefore is secure and reliable.

Fig. 4 shows a frame 4 used for the transport within the media gateway. The VCID 40 is integrated into a frame 4 and is flanked by an internal backplane header 41 and a payload 42. The internal backplane header 41 consists of a backplane media access control destination address 411 (= BP MAC DA), a backplane media access control source address 412 (= BP MAC SA), an 802.1 P/Q tag 413, and a length field 414. The VCID field 40 is inserted as a field following the header 41. Preferably, the VCID field 40 has a length of 32 bits. Although this reduces the available Ethernet payloadsize by 4 byte, it does not pose any drawback due to the available payload versus service requirements in VoP systems.

The payload 42 may be a connection oriented (= CO) payload or a connectionless (= CL) payload. In the case of the CO payload, the payload 42 may consist of an AAL2 CPS packet header (= PH) and an AAL2 CPS packet payload (= PP) such as 40 bytes G.711@5ms (CPS = Common Part Sublayer). In the case of the CL payload, the payload 42 may consist of a RTP header and a RTP payload such as 80 bytes G.711@10ms.

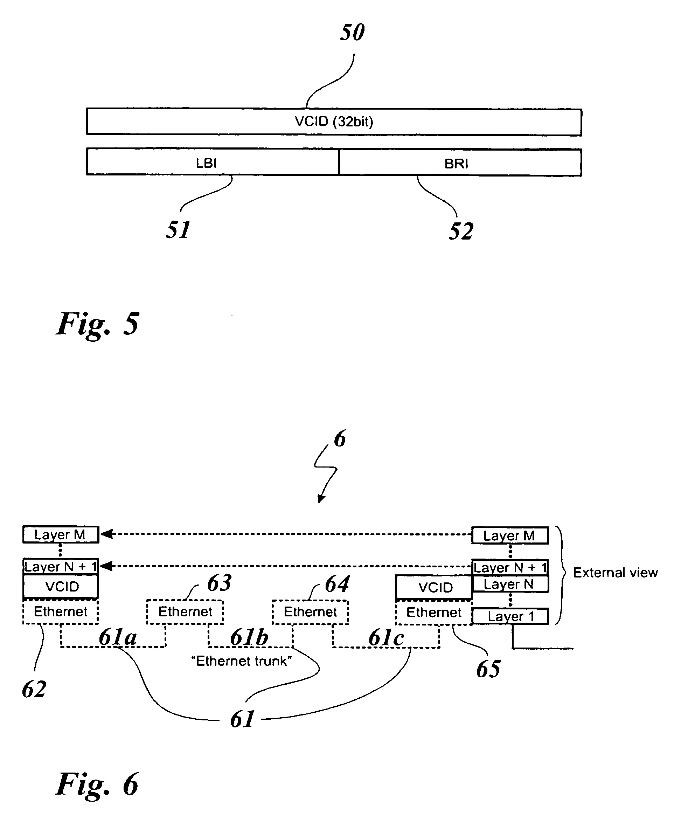

Fig. 5 shows a preferred VCID layout. The VCID has been invented as a 32 bit connection identifier. Instead of using the VCID as a flat number, the VCID field 50 has been structured in a hierarchical way:
- Logical Board Identifier 51 (LBI) and
- Board Resource Identifier 52 (BRI).

Basically the LBI 51 and BRI 52 address ranges are not fixed. A typical application is to use an 8 bit LBI 51 and a 16 bit BRI 52, still having 8 bits reserved for future use.

The LBI 51 is used to identify a resource in a logical way. This is important to make use of VCID for an efficient system internal redundancy support. The BRI 52 may be used to identify a specific board local resource such as a DSP channel.

Fig. 6 shows a diagram which explains the transport of N connections (Layer 1 to Layer N) over one Ethernet trunk 61 by means of the VCIDs. Thousands of internal connections, identified by unambiguous VCIDs, may share one Ethernet trunk 61, i.e., a flow of Ethernet frames having the same MAC destination and source address (MAC = media access control). The Ethernet trunk 61 of Fig. 6 comprises three trunk sections 61a, 61b, 61c which connect the switching and/or processing units 62 to 65. The switching and/or processing units 62 to 65 may comprise Ethernet switches, interface units, processing units, etc.

For an external viewer, the data traffic, consisting of N connections, is transported across the gateway 6 simultaneously on 1, ..., N, N+1, ..., M layers. However, according to the invention, the layers 1, ..., N are multiplexed onto one single Ethernet trunk 61, each layer, i.e., each packet stream, identified by means of an unambiguous VCID. Each frame of the packet streams 1, ..., N is assigned a VCID and multiplexed onto the single Ethernet trunk 61. The multiplexed packet stream is passed through the several switching and/or processing units 62 to 65 until the packet stream arrives at the last switching and/or processing unit 62, 65. There, the frames of the layers 1, ..., N are identified by help of their VCID and the multiplexed packet stream is demultiplexed into the layers 1, ..., N.

Thus from an external view, the different connections are transported across the gateway 6 as separate layers while internally, the layers are multiplexed on a single trunk 61 by means of the VCIDs. One of the motivations of the VCID concept was the support of distributed and scalable system architectures. Independent of the external protocol stack the VCID concept can be used to allow distributed locations (= resources) for the termination of protocol layers. The VCID concept is suited to split the protocol stack at various layers. Furthermore it allows to achieve independency of external transport technologies (CO, CL).

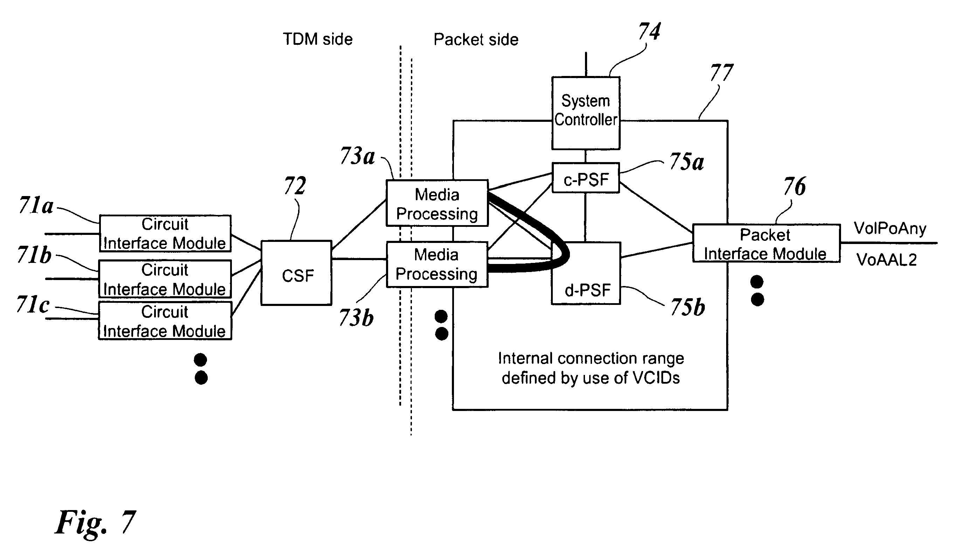

Figs. 7 to 9 show three embodiments of the invention, in particular a VCID usage which is system internal as well as limited to the packet side within a media gateway. In conjunction with the internal backplane header, the VCID makes up the way how system internally multiple applications can be realised.

Figs. 7 to 9 show several circuit interface modules 71, 81, 91 which serve as an interface of the media gateway to the circuit switched network. Each circuit interface module 71, 81, 91 is coupled to a circuit switching fabric 72, 82, 92 (= CSF). The CSF 72, 82, 92 in turn is connected to several media processing units 73, 83, 93 which are located at the interface of the circuit side and the packet side of the media gateway.

The media processing units 73, 83, 93 integrate the VCIDs for internal packet switching purposes. The use of the VCID in the frame is confined to the internal connection range 77, 87, 97. Within the VCID range 77, 87, 97, also packet switching fabrics (= PSF) such as c-PSF 75a, 85a, 95a and d-PSF 75b, 85b, 95b, a system controller 74, 84, 94 and a packet interface module 76, 86, 96 are located. The packet interface module 76, 86, 96 serves as an interface of the media gateway to the packet switched network. The packet switched network may operate under a VoIP or a VoAAL2 technology (VoIP = Voice over IP; VoAAL2 = Voice over AAL2).

The VCID solution introduces the connection oriented principle for the internal handling of packet streams. As such it represents a generic concept that realizes independence of external transport technologies. In case of a media gateway, thousands of e.g. RTP sessions are multiplexed on one Ethernet trunk whereas each session is system wide unambiguously identified by the VCID.

The VCID represents on one hand the actual connection for carrying packets between distributed protocol layer terminations (= system resources) as well as between system internal resources itself. By linking the VCID values to certain resources (e.g. DSP channels or UDP ports) and by a VCID structuring, which gives the VCID a logical meaning, system redundancy capabilities can be efficiently supported. Furthermore due to the simple nature of the the VCID, efficient and powerful implementations can be chosen that meet the packet forwarding performance needs of a high density media gateway.

Fig. 7 shows a circuit-to-circuit application of the media gateway. In the case of circuit to circuit network interworking such as GSM to PSTN, the media gateway is used for switching the media data flow from one circuit switched network to another circuit switched network (GSM = Global System for Mobile Communications). Within the gateway, the frames are transported from one media processing unit 73a via the d-PSF 75b to another media processing unit 73b.

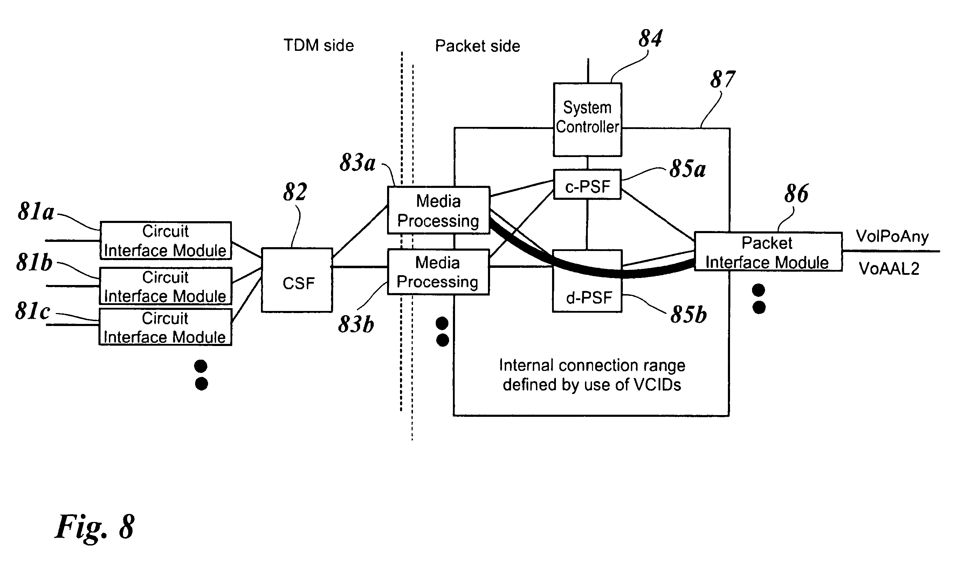

Fig. 8 shows a circuit-to-packet application of the media gateway. In the case of service interworking such as TDM to RTP/UDP/IP, the media gateway is used for switching the media data flow from a circuit switched network to the packet switched network. Within the gateway, the frames are transported from one media processing unit 83a via the d-PSF 85b to the packet interface module 86.

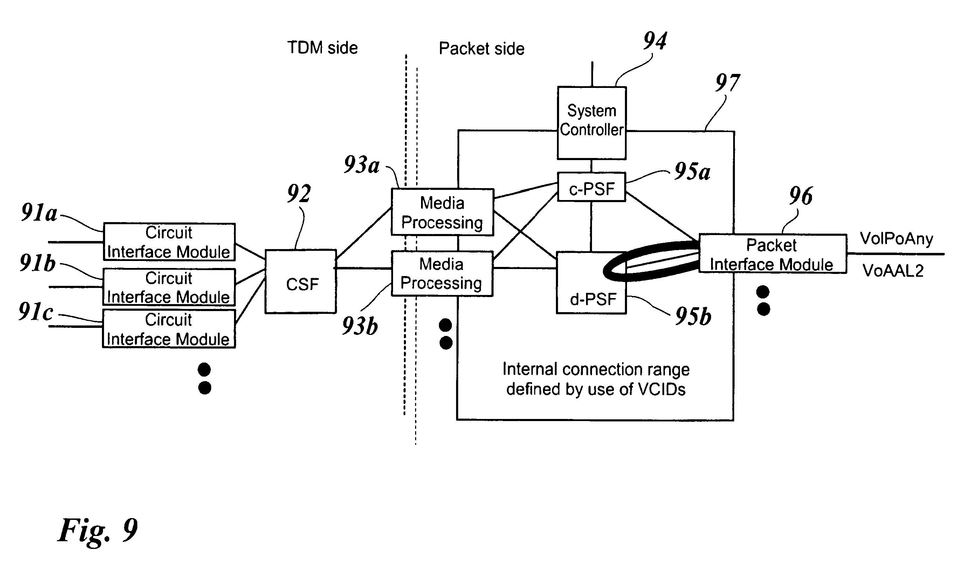

Fig. 9 shows a packet-to-packet application of the media gateway. In the case of packet to packet network interworking such as RTP/UDP/IP to AAL2/ATM, the media gateway is used for switching the media data flow from one packet switched network to another packet switched network. Within the gateway, the frames are transported from one resource / channel of the packet interface module 96 via the d-PSF 95b to another resource / channel of the packet interface module 96.

## Claims

1. A gateway (3) for connecting a public switched telephone network (1) and an Internet Protocol network (2), comprising at least one interface unit (71) with the public switched telephone network (1), at least one interface unit (76) with the Internet Protocol network (2), and at least one processing unit (73) for media conversion between the public switched telephone network (1) and the Internet Protocol network (2),
**characterised in**
**that** one or more of said interface units (71, 76) and/or media conversion processing units (73) are adapted to communicate gateway-internally via an Ethernet switch for internal packet switching, using an internal connection oriented layer with virtual connection identifiers,
whereby a virtual connection identifier is integrated into a frame (4) used for the transport within the gateway (3) and is inserted in a field (40) following an internal backplane header (41) of the frame (4) and flanked by a payload (42) of the frame (4).

2. The gateway of claim 1,
**characterised in**
**that** said interface units (71, 76) and/or media conversion processing units (73) are linked via Ethernet trunks (101).

3. The gateway of claim 1,
**characterised in**
**that** said interface units (71, 76) and/or media conversion processing units (73) are adapted to handle packets used for communication over the Ethernet switch, said packets comprising an Ethernet header (41), a payload (42), and a virtual connection identifier inserted between said Ethernet header (41) and payload (42).

4. The gateway of claim 3,
**characterised in**
**that** the payload (42) comprises data complying with connectionless or connection oriented external transport technologies.

5. The gateway of claim 1,
**characterised in**
**that** said interface units (71, 76) and/or media conversion processing units (73) are adapted to allocate the virtual connection identifier to another resource if a functional status of a resource changes.

6. The gateway of claim 1,
**characterised in**
**that** the gateway (3), when detecting a failure and/or breakdown of one of said interface units (71, 76) and/or media conversion processing units (73), is adapted to provide a reconfiguration of said interface units (71, 76) and/or processing units (73) by determining an address of the concerned or faulty interface unit (71, 76) and/or media conversion processing unit (73) and reassigning the determined address to a spare interface unit (71, 76) and/or media conversion processing unit (73).

7. The gateway of claim 1,
**characterised in**
**that** said interface units (71, 76) and/or media conversion processing units (73) are represented by physical boards.

8. The gateway of claim 1,
**characterised in**
**that** the virtual connection identifier comprises a logical board identifier (51) for identifying a resource in a logical way.

9. The gateway of claim 1,
**characterised in**
**that** the virtual connection identifier comprises a board resource identifier (52) for identifying a unit-specific local resource such as a channel.

10. The gateway of claim 1,
**characterised in**
**that** said interface units (71, 76) and/or media conversion processing units (73) are adapted to insert and remove the virtual connection identifier into and from the communication traffic, respectively, within the gateway (3), in particular that the usage of the virtual connection identifier is limited to the packet side of the gateway (3).

## Patentansprüche

1. Gateway (3) zur Verbindung eines öffentlichen Fernsprech-Vermittlungsnetzwerks (1) und eines Internet-Protokoll-Netzwerks (2), der mindestens eine Schnittstelleneinheit (71) zum öffentlichen Fernsprech-Vermittlungsnetzwerk (1), mindestens eine Schnittstelleneinheit (76) zum Internet-Protokoll-Netzwerk (2) und mindestens eine Verarbeitungseinheit (73) zur Medien-Umwandlung zwischen dem öffentlichen Fernsprech-Vermittlungsnetzwerk (1) und dem Internet-Protokoll-Netzwerk (2) enthält,
**dadurch gekennzeichnet, dass**
eine der Schnittstelleneinheiten (71, 76) und/oder Medien-Umwandlungs-Verarbeitungseinheiten (73) angepasst ist, gateway-intern über einen Ethernet-Switch zur internen Paketvermittlung zu kommunizieren, wozu eine interne verbindungsorientierte Ebene mit virtuellen Verbindungs-Kennungen benutzt wird, wobei eine virtuelle Verbindungs-Kennung in einen Rahmen (4) integriert ist, der für die Übertragung im Gateway (3) benutzt wird und in ein Feld (40) eingefügt ist, das auf eine interne Rückwandplatinen-Kopfinformation (41) des Rahmens (4) folgt und durch eine Nutzinformation (42) des Rahmens (4) flankiert ist.

2. Gateway aus Anspruch 1,
**dadurch gekennzeichnet, dass**
die Schnittstelleneinheiten (71, 76) und/oder Medien-Umwandlungs-Verarbeitungs-Einheiten (73) über Ethernet-Verbindungsleitungen (101) miteinander verbunden sind.

3. Gateway aus Anspruch 1,
**dadurch gekennzeichnet, dass**
die Schnittstelleneinheiten (71, 76) und/oder Medien-Umwandlungs-Verarbeitungs-Einheiten (73) angepasst sind, Pakete zu verarbeiten, die zur Kommunikation über den Ethernet-Switch benutzt werden, wobei die Pakete eine Ethernet-Kopfinformation (41), eine Nutzinformation (42) und eine virtuelle Verbindungs-Kennung enthalten, die zwischen der Ethernet-Kopfinformation (41) und der Nutzinformation (42) eingefügt ist.

4. Gateway aus Anspruch 3,
**dadurch gekennzeichnet, dass**
die Nutzinformation (42) Daten enthält, die verbindungslosen oder verbindungsorientierten externen Übertragungs-Technologien entsprechen.

5. Gateway aus Anspruch 1,
**dadurch gekennzeichnet, dass**
die Schnittstelleneinheiten (71, 76) und/oder Medien-Umwandlungs-Verarbeitungs-Einheiten (73) angepasst sind, die virtuelle Verbindungs-Kennung einer anderen Ressource zuzuordnen, wenn sich ein Funktions-Status einer Ressource ändert.

6. Gateway aus Anspruch 1,
**dadurch gekennzeichnet, dass**
der Gateway (3), wenn er einen Fehler und/oder Ausfall einer der Schnittstelleneinheiten (71, 76) und/oder Medien-Umwandlungs-Verarbeitungs-Einheiten (73) erkennt, angepasst ist, eine Rekonfiguration der Schnittstelleneinheiten (71, 76) und/oder Verarbeitungs-Einheiten (73) bereitzustellen, indem er eine Adresse der betreffenden fehlerhaften Schnittstelleneinheit (71, 76) und/oder Medien-Umwandlungs-Verarbeitungs-Einheit (73) bestimmt und die festgestellte Adresse einer Ersatz-Schnittstelleneinheit (71, 76) und/oder Medien-Umwandlungs-Verarbeitungs-Einheit (73) zuordnet.

7. Gateway aus Anspruch 1,
**dadurch gekennzeichnet, dass**
die Schnittstelleneinheiten (71, 76) und/oder Medien-Umwandlungs-Verarbeitungs-Einheiten (73) durch physikalische Leiterplatten repräsentiert werden.

8. Gateway aus Anspruch 1,
**dadurch gekennzeichnet, dass**
die virtuelle Verbindungs-Kennung eine logische Leiterplatten-Kennung (51) zur Kennzeichnung einer Ressource auf logische Weise enthält.

9. Gateway aus Anspruch 1,
**dadurch gekennzeichnet, dass**
die virtuelle Verbindungs-Kennung eine Leiterplatten-Ressourcen-Kennung (52) zur Kennzeichnung einer für die Einheit spezifischen lokalen Ressource, wie z.B. eines Kanals, enthält.

10. Gateway aus Anspruch 1,
**dadurch gekennzeichnet, dass**
die Schnittstelleneinheiten (71, 76) und/oder Medien-Umwandlungs-Verarbeitungs-Einheiten (73) angepasst sind, die virtuelle Verbindungs-Kennung in den Kommunikations-Verkehr im Gateway (3) einzufügen, bzw. aus ihm zu entfernen, insbesondere **dadurch**, dass die Benutzung der virtuellen Verbindungs-Kennung auf die Paket-Seite des Gateways (3) eingeschränkt ist.

## Revendications

1. Passerelle (3) destinée à connecter un réseau téléphonique public commuté (1) et un réseau IP (2), comprenant au moins une unité d'interface (71) avec le réseau téléphonique public commuté (1), au moins une unité d'interface (76) avec le réseau IP (2) et au moins une unité centrale (73) pour la conversion de support entre le réseau téléphonique public commuté (1) et le réseau IP (2),
**caractérisée en ce que**
une ou plusieurs desdites unités d'interface (71, 76) et/ou unités centrales de conversion de support (73) est/sont adaptée(s) pour communiquer à l'intérieur de la passerelle via un commutateur Ethernet pour une commutation de paquets, en utilisant une couche avec connexion interne avec des identifiants de connexion virtuels, moyennant quoi un identifiant de connexion virtuel est intégré à une trame (4) utilisée pour le transport à l'intérieur de la passerelle (3) et est inséré dans un champ (40) suivant un en-tête de fond de panier interne (41) de la trame (4) et encadré de données utiles (42) de la trame (4).

2. Passerelle selon la revendication 1,
**caractérisée en ce que**
lesdites unités d'interface (71, 76) et/ou unités centrales de conversion de support (73) sont reliées via des jonctions Ethernet (101).

3. Passerelle selon la revendication 1,
**caractérisée en ce que**
lesdites unités d'interface (71, 76) et/ou unités centrales de conversion de support (73) sont adaptées pour traiter les paquets utilisés pour la communication via le commutateur Ethemet, lesdits paquets comprenant un en-tête Ethernet (41), des données utiles (42) et un identifiant de connexion virtuel inséré entre ledit en-tête Ethernet (41) et lesdites données utiles (42).

4. Passerelle selon la revendication 3,
**caractérisée en ce que**
les données utiles (42) comprennent des données conformes aux technologies de transport externe avec ou sans connexion.

5. Passerelle selon la revendication 1,
**caractérisée en ce que**
lesdites unités d'interface (71, 76) et/ou unités centrales de conversion de support (73) sont adaptées pour attribuer l'identifiant de connexion virtuel à une autre ressource si un état fonctionnel d'une ressource change.

6. Passerelle selon la revendication 1,
**caractérisée en ce que**
la passerelle (3), lorsqu'elle détecte une défaillance et/ou une panne de l'une desdites unités d'interface (71, 76) et/ou unités centrales de conversion de support (73), est adaptée pour produire une reconfiguration desdites unités d'interface (71, 76) et/ou unités centrales (73) en déterminant une adresse de l'unité d'interface concernée ou défaillante (71, 76) et/ou de l'unité centrale de conversion de support (73) et en réassignant l'adresse déterminée à une unité d'interface (71, 76) et/ou une unité centrale de conversion de support (73) de secours.

7. Passerelle selon la revendication 1,
**caractérisée en ce que**
lesdites unités d'interface (71, 76) et/ou unités centrales de conversion de support (73) sont représentées par des cartes physiques.

8. Passerelle selon la revendication 1,
**caractérisée en ce que**
l'identifiant de connexion virtuel comprend un identifiant de carte logique (51) permettant d'identifier une ressource de manière logique.

9. Passerelle selon la revendication 1,
**caractérisée en ce que**
l'identifiant de connexion virtuel comprend un identifiant de ressource carte (52) permettant d'identifier une ressource locale spécifique à une unité telle qu'un canal.

10. Passerelle selon la revendication 1,
**caractérisée en ce que**
lesdites unités d'interface (71, 76) et/ou unités centrales de conversion de support (73) sont adaptées pour insérer et supprimer l'identifiant de connexion virtuel dans et du trafic de communication, respectivement, à l'intérieur de la passerelle (3), en particulier **en ce que** l'usage de l'identifiant de connexion virtuel est limité au côté des paquets de la passerelle (3).
